Europäisches Patentamt

European Patent Office

Office européen des brevets

(19)

(11)  **EP 0 827 358 A1**

(12)  **EUROPÄISCHE PATENTANMELDUNG**

(43) Veröffentlichungstag:
  **04.03.1998  Patentblatt 1998/10**

(51) Int. Cl.$^6$: **H04Q 11/04**

(21) Anmeldenummer: **97113864.9**

(22) Anmeldetag: **11.08.1997**

(84) Benannte Vertragsstaaten:
  **AT BE CH DE DK ES FI FR GB GR IE IT LI LU MC NL PT SE**
  Benannte Erstreckungsstaaten:
  **AL LT LV RO SI**

(30) Priorität: **26.08.1996 DE 19634492**

(71) Anmelder:
  **SIEMENS AKTIENGESELLSCHAFT**
  **80333 München (DE)**

(72) Erfinder: **Wallmeier, Eugen, Dr.**
  **82223 Eichenau (DE)**

(54)  **Verfahren zum optimierten Übertragen von ATM-Zellen über Verbindungsabschnitte**

(57)  Beim Stand der Technik kann die Verwendung des Weighted Fair Queueing Scheduling - Verfahren zum Verlust von ATM-Zellen führen. Das erfindungsgemäße Verfahren schafft hier Abhilfe, indem nach dem Weighted Fair Queueing Scheduling - Verfahren behandelte ATM-Zellen in einer weiteren Verfahrensstufe einer Spitzenbitratenbegrenzung unterworfen werden. Diese erfolgt durch eine Begrenzung der zeitlichen Abstandes zweier Lesezähler, die in einem zyklischen Zeitraster die Speicherelemente eines Kalenders abtasten.

FIG 1

EP 0 827 358 A1

**Beschreibung**

Die Erfindung betrifft ein Verfahren gemäß dem Oberbegriff des Patentanspruchs 1.

In zeitgemäßen ATM-Systemen werden Informationen in Zellen übertragen. Diese weisen einen Kopfteil sowie einen Informationsteil auf. Im Kopfteil sind die Verbindungsinformationen und im Informationsteil die zu übertragenden Nutzdaten abgespeichert. Die eigentliche Datenübertragung erfolgt in Form von eine Mehrzahl von Zellen aufweisenden Zellenströmen über Verbindungsabschnitte zwischen Sender und Empfänger. Dabei besteht gegebenenfalls das Erfordernis, diese Verbindungsabschnitte derart auszunutzen, daß eine Mehrzahl von Sendeeinrichtungen die von diesen ausgehenden Zellenströme über denselben Verbindungsabschnitt übertragen.

Um die Übertragung dieser Zellenströme entsprechend den jeweiligen Erfordernissen durchführen zu können, haben sich beim Stand der Technik sogenannte Scheduling-Verfahren durchgesetzt. Dabei werden die ATM-Zellen in einer bestimmten Reihenfolge aus den Pufferspeichern einer Schedulereinrichtung ausgelesen. Als Beispiel für ein derartiges Scheduling-Verfahren sei das WEIGHTED FAIR QUEUEING SCHEDULING - Verfahren erwähnt. Dieses bekannte Verfahren ist beispielsweise in der Druckschrift „Virtual Spacing for Flexible Traffic Control", J.W. Roberts, International Journal of Communication Systems, Vol. 7, 307-318 (1994) aufgezeigt. Dabei werden den einzelnen Zellenströmen unterschiedliche Gewichtungsfaktoren zugewiesen, mit denen der eigentliche Übertragungsvorgang auf den einzelnen Verbindungsabschnitten gesteuert wird.

Problematisch an einer derartigen Vorgehensweise ist, daß viele der Scheduling-Verfahren wie beispielsweise das soeben erläuterte Weighted Fair Queueing Scheduling - Verfahren keine Spitzenbitratenbegrenzung auf den nachfolgenden Verbindungsabschnitten sicherstellen können. Diese ist aber überall dort erforderlich, wo Zellenströme zu Knoten mit kleinen Speichern geleitet werden.

In der deutschen Patentanmeldung mit der Anmeldenummer 37 108 07 wird ein Scheduling-Verfahren vorgeschlagen, mittels dem die Zellraten an die Übertragungskapazität der Verbindungsabschnitte angepaßt werden. Dieses Verfahren weist zwei Stufen auf, die zeitlich hintereinander zum Ablauf gelangen. Wie diese Stufen im Detail ausgebildet sind, ist hier nicht offenbart.

Weiterhin ist in der europäischen Patentschrift 0 498 092 ein Verfahren aufgezeigt, demgemäß die verbindungsindividuell festgelegte Übertragungsbitrate strikt begrenzt wird. Dies bedeutet, daß beispielsweise im Überlastfall ein weiterer Verbindungsaufbau abgewiesen wird. Eine flexible Handhabung ist somit nicht möglich.

Der Erfindung liegt die Aufgabe zugrunde, einen Weg aufzuzeigen, wie die Zellraten an die Übertragungskapazität der Verbindungsabschnitte optimal angepaßt werden können und zugleich ein etwaiger Überlastfall flexibel gesteuert werden kann.

Die Erfindung wird, ausgehend von den im Oberbegriff des Patentanspruchs 1 angegebenen Merkmalen durch die Merkmale des kennzeichnenden Teils gelöst.

Der Vorteil der Erfindung liegt im Vorgeben eines Schwellenwertes, um den eine erste Variable von einer zweiten Variablen abweichen darf. Wird dieser Schwellenwert überschritten, wird die Inkrementierung der ersten Variablen solange angehalten, bis der vorgegebene Schwellenwert wieder unterschritten wird. Dadurch wird eine faire Behandlung aller bestehenden und auch im Überlastfall noch aufzubauenden Verbindungen erreicht. Dies bedeutet, daß im Überlastfall alle Verbindungen um den gleichen Faktor weniger ATM-Zellen pro Sekunde aussenden. Eine Abweisung von auch im Überlastfall noch aufzubauenden Verbindungen unterbleibt darüberhinaus.

Weitere Ausgestaltungen der Erfindung sind in den Unteransprüchen angegeben.

Gemäß Anspruch 2 ist vorgesehen, daß in den Schedulereinrichtungen erste logische Warteschlangen definiert werden, die nach Maßgabe der in einer Tabelle sowie einem Kalender getätigten Einträge adressiert werden. Dabei werden die ersten logischen Warteschlangen durch jeweils einen Pufferspeicher und Speicherzellen eines Zellenspeichers definiert, wobei in den Speicherzellen ATM-Zellen gespeichert sind. Ferner wird damit die zweite Stufe des zweistufigen Verfahrens definiert.

Gemäß Anspruch 3 ist vorgesehen, daß von einer zentralen Schedulerblockeinrichtung die Schedulereinrichtungen nach Maßgabe der in der Tabelle sowie dem Kalender getätigten Einträge adressiert werden. Damit wird die erste Stufe des zweistufigen Verfahrens definiert.

Gemäß Anspruch 4 ist vorgesehen, daß zweite logische Warteschlangen definiert werden, die in ihrer Gesamtheit eine verkettete Liste darstellen. Dabei werden die zweiten logischen Warteschlangen durch jeweils Einträge im Kalender sowie einem zugeordneten Speicher definiert. Damit ist der Vorteil verbunden, daß die Einträge in diese verkettete Liste flexibler handhabbar sind.

Gemäß Anspruch 5 ist vorgesehen, daß über einen gesonderten, parallel zu den Schedulereinrichtungen angeordneten Verbindungsabschnitt zusätzlich Real-Time ATM-Zellen der Schedulerblockeinrichtung mit einer höheren Priorisierung zugeführt werden, als die über die Schedulereinrichtungen übertragenen ATM-Zellen aufweisen. Damit ist der Vorteil verbunden, daß diese ATM-Zellen mit höchster Priorität im System übertragen werden, wodurch Echounterdrückungsmaßnahmen gegebenenfalls unterbleiben können.

Die Erfindung wird im folgenden anhand eines Ausführungsbeispiels näher erläutert.

Es zeigen:

Figur 1     ein Vermittlungssystem, auf dem das erfindungsgemäße Verfahren zum Ablauf gelangen soll,

Figur 2     eine spezielle Ausführungsform des erfindungsgemäßen Verfahrens,

Figur 3     die Realisierung von logischen Warteschlangen

Figur 4     der Kalendermechanismus

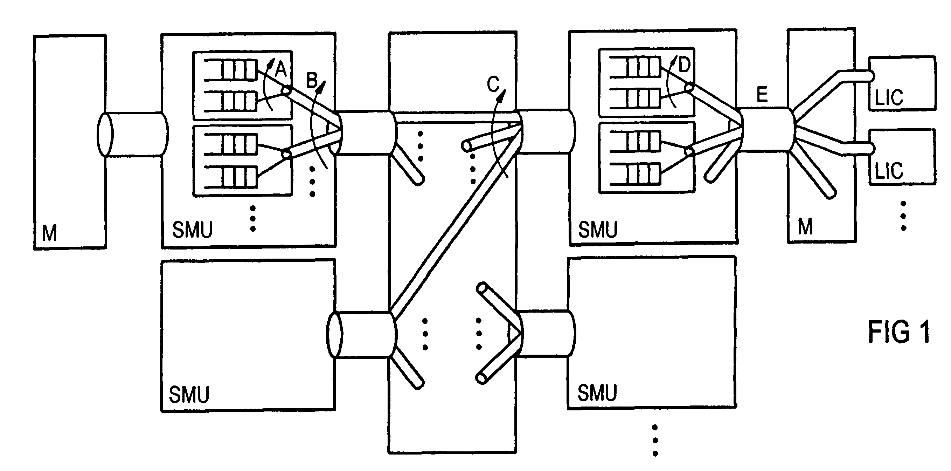

In Fig. 1 ist ein Vermittlungssystem aufgezeigt, auf dem das erfindungsgemäße Verfahren zum Ablauf gelangen soll. Hier sind jeweils eingangsseitig und ausgangsseitig Multiplexeinrichtungen M aufgezeigt, wobei die ausgangsseitigen Multiplexeinrichtungen M mit Schnittstellenanpassungseinheiten LIC verbunden sind. Weiterhin sind statistische Multiplexeinrichtungen SMU aufgezeigt, in denen Schedulingverfahren zum Ablauf gelangen. Diese Verfahren sind hier mit den Buchstaben A, B, C , D angedeutet. Weiterhin ist eine Übertragungsleitung E aufgezeigt, an die eingangsseitig über die statistische Multiplexeinrichtung SMU eine Mehrzahl von Schedule-Einrichtungen angeschlossen ist. Ausgangsseitig ist die Verbindungsleitung E mit der ausgangsseitigen Multiplexeinrichtung M an die Schnittstellenanpassungseinheiten LIC angeschlossen. Die Verbindungsleitung E sowie die Schnittstellenanpassungseinheiten LIC sind innerhalb des Vermittlungssystem im Hinblick auf die Übertragungskapazität als kritisch einzustufen. Ohne besondere Maßnahmen müßten ATM-Zellen verworfen werden, um die maximale Spitzenbitrate auf dem Übertragungsabschnitt E einhalten zu können.

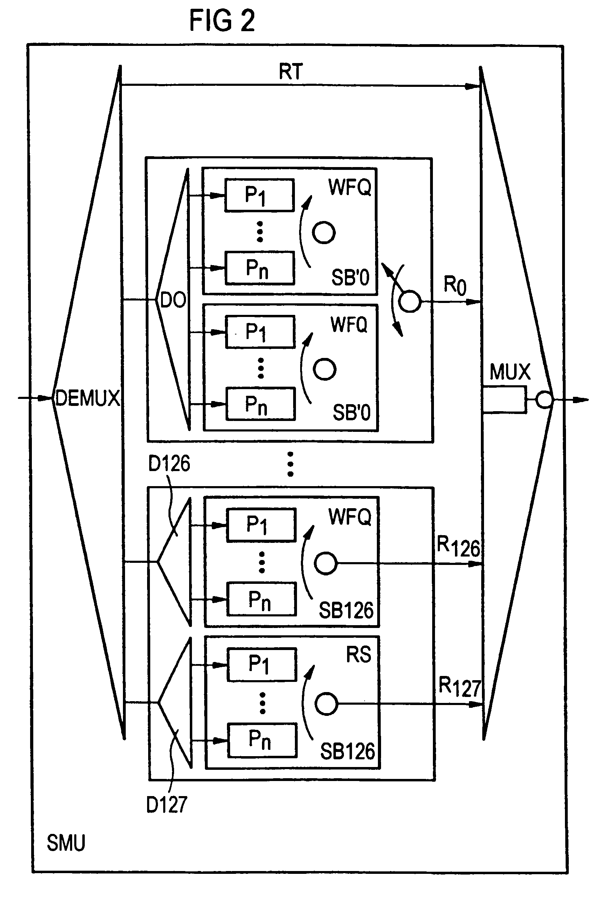

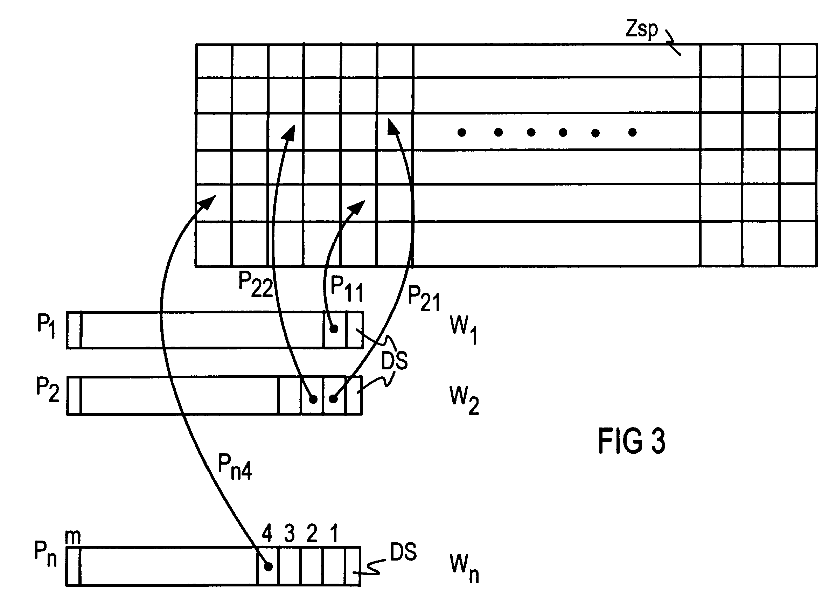

In Fig. 2 ist die statistische Multiplexeinrichtung SMU näher dargestellt, die in Fig. 1 an die ausgangsseitige Multiplexeinrichtung M herangeführt ist. Die über einen Verbindungsabschnitt ankommenden ATM-Zellen werden der Demultiplexeinrichtung DEMUX zugeführt. Von hier werden die ATM-Zellen über weitere Demultiplexeinrichtungen D0...D127 verbindungsindividuell an logische Warteschlangen $W_1...W_n$ in den Schedulereinrichtungen SB0...SB127 weitergereicht, die physikalisch aus jeweils einem der in Fig. 2 aufgezeigten Pufferspeicher $P_1.. ..P_n$ und einem gemeinsamen, in Fig. 3 aufgezeigten Speichersystem Zsp gebildet sind.

Die soeben angesprochenen Verhältnisse sind in Fig. 3 detaillierter dargestellt. Hier ist das gemeinsame Speichersystem Zsp aufgezeigt, das aus einer Vielzahl von der Aufnahme von ATM-Zellen dienenden Speicherzellen gebildet ist und damit die Funktion eines Zellenspeichers aufweist. Die logische Warteschlange $W_1$ wird also beispielsweise aus dem Pufferspeicher $P_1$ und den, im Zellenspeicher Zsp gespeicherten, einer bestimmten Verbindung zugehörigen ATM-Zellen gebildet und ist verbindungsindividuell der Verbindung mit der Nummer 1 zugeordnet. In gleicher Weise werden die verbleibenden logischen Warteschlangen $W_2...W_n$ definiert. Weiterhin sind die als FIFO Speicher ausgebildeten Pufferspeicher $P_1...P_n$ aufgezeigt. Diese weisen jeweils eine Mehrzahl m von Speicherelementen $P_{n1}...P_{nm}$ auf, die die Funktion von Zeigern (Pointer) haben. Zusätzlich sind in den Pufferspeichern $P_1...P_n$ Datensätze DS abgelegt, die jeweils einmal pro Pufferspeicher vorhanden sind. Hier sind verbindungsindividuelle Daten wie beispielsweise die maximale Zellenrate (Peak Cell Rate PCR), mit der die ATM-Zellen über die Verbindung übertragen werden sollen sowie die für das Weighted Fair Queueing Scheduling - Verfahren wesentlichen Gewichtungsfaktoren $r_i$ abgelegt. Diese Werte werden beim Verbindungsaufbau festgelegt und mitübertragen.

Eine im System ankommende ATM-Zelle wird nun nicht in einem der Pufferspeicher $P_1...P_n$ direkt abgespeichert, sondern in den Zellenspeicher Zsp eingeschrieben. In den Pufferspeichern $P_1...P_n$ werden lediglich die angesprochenen Zeiger $P_{n1}...P_{nm}$ abgelegt, die auf die entsprechende Speicherzelle im Zellenspeicher Zsp hindeuten, unter der die in Frage kommende ATM-Zelle abgelegt ist.

In vorliegendem Ausführungsbeispiel wird nun davon ausgegangen, daß die ATM-Zellen nach einem bekannten Schedulingverfahren aus den logischen Warteschlangen $W_1...W_n$ der Schedulereinrichtungen SB0..SB127 ausgelesen werden. In den Schedulereinrichtungen SB0...SB126 soll das bekannte Weighted Fair Queueing Scheduling - Verfahren WFQ verwendet werden. Auch andere Verfahren sind jedoch möglich, beispielhaft sei hierzu das in der Schedulereinrichtung SB127 ablaufende Verfahren aufgezeigt. Hier wird ein modifiziertes Scheduling - Verfahren, im folgenden Rate Shaping Verfahren RS genannt, angewendet, das Gegenstand der vorliegenden Erfindung ist. Die Funktionsweise dieses Verfahrens wird später im Detail erläutert.

Gemäß vorliegendem Ausführungsbeispiel gelangt nun ein zweistufiges Scheduling Verfahren zum Ablauf, wobei die eigentliche Spitzenbitratenbegrenzung im Rate Shaping Verfahren RS gesteuert wird. Das bekannte Weighted Fair Queueing Scheduling - Verfahren WFQ bildet dabei die zweite Stufe des zweistufigen Verfahrens. Hier kann übrigens jedes beliebige Schedulingverfahren zum Ablauf gelangen, da der Ablauf der zweiten Stufe unabhängig von dem in der ersten Stufe verwendeten Verfahren ist. Insofern ist die Verwendung des Weighted Fair Queueing Scheduling - Verfahrens nicht zwingend erforderlich. Bei der Verwendung des Weighted Fair Queueing Scheduling - Verfahrens WFQ werden den ATM-Zellen wie eingangs beschrieben unterschiedliche Gewichtungsfaktoren $r_i$ zugewiesen. Mit Hilfe dieser Gewichtungsfaktoren werden die ATM-Zellen später nach Maßgabe eines noch näher zu erläuternden Kalendermechanismus ausgelesen und übertragen.

Die erste Stufe des zweistufigen erfindungsgemäßen Verfahrens gelangt auf der Multiplexeinrichtung SBS zum Ablauf. Dabei handelt es sich um eine Schedulerblockeinrichtung, deren Aufgabe darin besteht, eine der Schedulereinrichtungen SB0.. ..SB127 nach Maßgabe eines Scheduling Verfahrens auszuwählen. In vorliegendem Ausführungsbeispiel wird das bereits erwähnte Rate Shaping Verfahren RS verwendet, das auch ohne nachgeschaltetes Scheduling - Verfahren zum Ablauf gelangen kann.

In der Multiplexeinrichtung SBS werden den auszuwählenden Schedulereinrichtungen SB0...SB127 weitere Gewichtungsfaktoren R0...R127 zugewiesen. Dabei handelt es sich um die Bitrate des Pfades bzw. der Verbindungsleitung, die von der entsprechenden Schedulereinrichtung gespeist wird. Der Faktor R ist weiterhin beliebig einstellbar. Dadurch läßt sich die Spitzenbitrate auf dem sich anschließenden Übertragungsabschnitt begrenzen. Die Auswahl der betreffenden Schedulereinrichtung SB0...SB127 erfolgt ebenso nach Maßgabe des Kalendermechanismus, der wie bei dem in der Schedulereinrichtung SB127 ablaufenden Rate Shaping Verfahren RS in diesem Fall eine kleine Modifizierung erfährt.

Zunächst wird also eine der Schedulereinrichtungen SB0..SB127 gemäß der ersten Stufe des zweistufigen Verfahrens ausgewählt. Dies soll in vorliegendem Ausführungsbeispiel die Schedulereinrichtung SB0 sein. Im folgenden wird dann durch den Ablauf der zweiten Stufe des zweistufigen Verfahrens eine der logischen Warteschlangen mit dem entsprechenden Pufferspeicher $P_1...P_n$ adressiert. Dies sei beispielsweise der Pufferspeicher $P_1$ der schedulereinrichtung SB0. Die als erstes gespeicherte ATM-Zelle wird nun zur Schedulerblockeinrichtung SBS übertragen und den weiteren Einrichtungen zugeführt. Gemäß Fig. 1 sind dies der Übertragungsabschnitt E, der dort aufgezeigte ausgangsseitige Multiplexer M sowie die Schnittstellenanpassungseinheiten LIC.

Auf der Multiplexeinrichtung SBS gelangt stets nur das Rate Shaping Verfahren RS zum Ablauf, das die Begrenzung der Spitzenbitrate eines Stromes von ATM-Zellen sicherstellt. Der Strom von ATM-Zellen stellt in der Regel eine Mehrzahl von Verbindungen dar. Dieser Mehrzahl wird durch eine Mehrzahl von virtuellen Kanalnummern (VCI) in einem virtuellen Pfad (VPI) Rechnung getragen. Insofern handelt es sich um die Spitzenbitrate der virtuellen Pfaden.

In einer weiteren Ausgestaltung der Erfindung werden die Schedulereinrichtungen gedoppelt ausgeführt. In vorliegendem Ausführungsbeispiel ist dies beispielhaft bei der Schedulereinrichtung SB0 durch die parallel dazu angeordnete Scheduler-Einrichtung SB'0 angedeutet.

In einer weiteren Ausgestaltung der Erfindung werden Real-Time ATM-Zellen RT der Schedulerblockeinrichtung SBS zugeführt. Dies sind ATM-Zellen, die im Zuge einer Online-Verbindung übertragen werden. Generell gilt, daß diese ATM-Zellen bevorzugt behandelt werden müssen, da sonst die an bestimmte Real Time Verbindungen gestellten hohen Anforderungen hinsichtlich der Verzögerungszeit nicht erfüllt werden können. Als Beispiel hierzu seien die bei Sprachverbindungen infolge zu langer Verzögerungszeit sowie Fehlanpassung entstehenden Echos erwähnt. Beim erfindungsgemäßen Verfahren wird diesen Real Time ATM-Zellen RT eine höhere Priorität zugewiesen. Dies bedeutet allerdings nicht,daß die ATM-Zellen in den Pufferspeichern $P_1...P_n$ solange nicht zur Schedulerblockeinrichtung SBS übertragen werden können, solange die Real Time ATM-Zellen RT übertragen werden. Die Real Time ATM-Zellen RT werden ohne Begrenzung der Spitzenbitrate zur Schedulerblockeinrichtung SBS übertragen. Damit können die ATM-Zellen RT die in den Schedulereinrichtungen SB0...SB127 von der zweiten Stufe des zweistufigen Schedulingverfahrens zu behandelnden ATM-Zellen überholen.

Im folgenden soll Kalendermechanismus, der beim Rate Shaping RS Verfahren verwendet wird, näher erläutert werden. Dabei gilt es zu beachten, daß die prinzipielle Funktionsweise unabhängig davon ist, ob das Rate Shaping Verfahren RS als erste oder zweite Stufe zum Ablauf gelangt. Die verbleibenden kleineren Unterschiede werden später näher erläutert. Generell gilt, daß die Aufgabe des Kalendermechanismus darin besteht, Vorplanungen zu treffen, wann und wo und in welcher Verbindung eine ATM-Zelle auszulesen und zu übertragen ist.

Gemäß dem vorstehend Gesagten werden also 2 hintereinander ablaufende Schedulingverfahren benötigt. Das erste Schedulingverfahren (1. Stufe) gelangt auf der Schedulerblockeinrichtung SBS zum Ablauf. Dabei wird zu einem bestimmten, vorher festgelegten Zeitpunkt $T_{now}$ eine der Schedulereinrichtungen SB0...SB127 auswählt. Das zweite Schedulingverfahren (2. Stufe) gelangt in den Schedulereinrichtungen SB0.. ..SB127 zum Ablauf. Hier werden nicht wie im ersten Fall Schedulereinrichtungen adressiert sondern die in den Schedulereinrichtungen angeordnete Pufferspeicher $P_1..P_n$ (Queues).

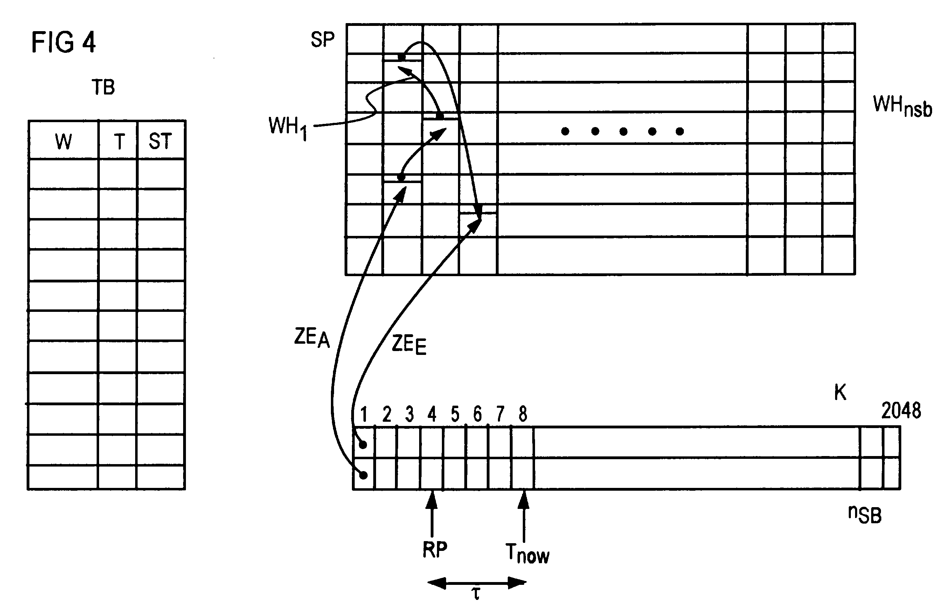

Anhand Fig. 4 soll nun der Kalendermechanismus am Beispiel der Schedulereinrichtungen SB0...SB127 näher erläutert werden. Demgemäß ist Fig. 4 zunächst ein Kalender K entnehmbar, der aus jeweils paarweise angeordneten Speicherelementen $n_{SB}$ ausgebildet ist. Diese werden fortlaufend durchnummeriert und repräsentieren Zeitintervalle. In vorliegendem Ausführungsbeispiel sind insgesammt $n_{SB} = 2048$ Speicherelemente vorgesehen. Als Einträge sind darin Zeiger $ZE_A$, $ZE_E$ enthalten. Dabei soll der Zeiger $ZE_A$ den Beginn einer jeweils weiteren logischen Warteschlange und der Zeiger $ZE_E$ das Ende derselben in einem weiteren Speicher SP markieren.

Der Speicher SP sowie die weiteren logischen Warteschlangen sind in Fig. 4 aufgezeigt. Die einzelnen Speicherzellen des Speichers SP sind aus jeweils 2 Elementen ausgebildet, wobei eines dieser Elemente die Adresse einer weiteren Speicherzelle des Speichers SP enthält. Das verbleibende, größere Element der Speicherzelle dient der Aufnahme einer Identifikationsnummer. Dies ist gemäß vorliegendem Ausführungsbeispiel die Identifikationsnummer der logischen Warteschlangen $W_1..W_n$. Die Organisation im Speicher SP erfolgt somit in Form einer verketteten Liste, womit die soeben angesprochenen weiteren logische Warteschlangen definiert sind. Sie weisen eine Mehrzahl von Gliedern auf und werden gemäß Fig. 4 durch die Bezugszeichen $WH_1...WH_{nSB}$ identifiziert.

Der Aufbau der logischen Warteschlangen $WH_1....WH_{nSB}$ erfolgt über die im Kalender K definierten Zeiger $ZE_A$, $ZE_E$. Dabei verweist der Zeiger $ZE_A$ auf das erste Glied am Anfang dieser logischen Warteschlange. Die übrigen Glieder werden durch das jeweils verbleibende Element in den Speicherzellen des Speichers SP definiert. Das letzte Glied dieser logischen Warteschlange ist dasjenige, das in dem betreffenden Element der Speicherzelle den Wert 0 enthält. Damit wird das Ende dieser logischen Warteschlange definiert. Damit ist jedem Eintrag im Kalender K eine logische Warteschlange zugeordnet.

Weiterhin ist gemäß Fig. 4 eine Tabelle TB aufgezeigt. Diese weist Spalten W, T und ST auf. In der Spalte W wird die Identifikationsnummer der logischen Warteschlangen $W_1...W_n$ eingetragen. Diese sind jeweils fest in dieser Spalte gespeichert.

In der Spalte T ist sind Werte $T_i$ eingetragen, die jeweils Zeiteinheiten repräsentieren und umgekehrt proportional zum jeweiligen Wert $r_i$ sind ($T_i = 1/r_i$). Der Wert $T_i$ repräsentiert dabei einen Mindestabstand zwischen zwei aufeinanderfolgenden ATM-Zellen, der einzuhalten ist, wodurch die Größe $r_i$ durch die Anzahl der ATM-Zellen/sec definiert ist. In der Spalte ST wird die Zeit eingetragen, zu der die ATM-Zelle aus der betreffenden logischen Warteschlange ausgelesen und übertragen werden soll. Da diese Zeit in der Praxis nicht immer exakt - z.B. bei hoher Last - einzuhalten ist, handelt es sich hierbei quasi um eine Wunschzeit. Damit ist gemäß der Tabelle TB für jede der logischen Warteschlangen $W_1...W_n$ die Spitzenbitrate (Spalte T) und die auszulesende Wunschzeit (Spalte ST) enthalten.

Gemäß Fig. 4 sind nun weiterhin Lesezeiger $T_{now}$ und RP aufgezeigt. Sie laufen innerhalb eines zyklischen Zeitrasters an den paarweise angeordneten Speicherelementen $n_{SB}$ des Kalenders K entlang. Die Einträge in diesen paarweise angeordneten Speicherelementen definieren die Adressen der Speicherzellen im Speicher SP, in denen die Identifikationsnummern für die logischen Warteschlangen $W_1...W_n$ abgelegt sind. Der Lesezeiger $T_{now}$ stellt die aktuelle Systemzeit dar und wird um einen Wert $T_{step}$ inkrementiert, wobei $T_{step}$ per Software einstellbar ist. Um einen vertretbare Größenordnung des Kalenders K ($n_{SB}$ = 2048) zu erhalten, wird der Lesezeiger $T_{now}$ nicht mit jedem Zellenzyklus um 1 erhöht, sondern alle 4 oder 8 Zellenzyklen. Der Lesezeiger $T_{now}$ wandert mit konstanter Geschwindigkeit den Einträgen entlang. Wenn der Lesezeiger $T_{now}$ auf einen Eintrag stößt, wird der dort gespeicherte Zeiger $Z_A$ ermittelt und zu der darin gespeicherten Adresse im Speicher SP verzweigt. Da hier das erste oder möglicherweise einzige Glied einer logischen Warteschlange abgelegt ist, wird zu dieser verzweigt und die betreffende ATM-Zelle ausgelesen. Wird vom Lesezeiger $T_{now}$ kein Eintrag vorgefunden, wird keine Aktion unternommen.

Damit kann aber nun gegebenenfalls das Problem auftreten, daß der Lesezeiger $T_{now}$ eine relativ umfangreiche logische Warteschlange $WH_1....WH_{nSB}$ im Speicher SP vorfindet. Dies bedeutet, daß nach dem Auslesen der dem ersten Glied entsprechenden ATM-Zelle aus dem Zellenspeicher Zsp weitere ATM-Zellen auszulesen sind. In diesem Fall wird die Anfangsadresse des ersten Gliedes im Kalender K aktualisiert, und das folgende Glied in der Speicherzelle des Speichers SP adressiert und anschließend die zugeordnete ATM-Zelle aus dem Zellenspeicher Zsp ausgelesen. Diese Vorgänge werden solange wiederholt, bis in dem einen Element der Speicherzelle des Speichers SP der Wert 0 vorgefunden wird und damit das Ende der jeweiligen logischen Warteschlange $WH_1....WH_{nSB}$ signalisiert wird.

Damit ist aber die Konsequenz verbunden, daß der Lesezeiger $T_{now}$ um 1 inkrementiert wird, obwohl er noch mit dem Abarbeiten der logischen Warteschlange $WH_1....WH_{nSB}$ beschäftigt ist. Aus diesem Grund wird ein zweiter Lesezeiger RP verwendet. Dabei wird dafür Sorge getragen, daß der Lesezeiger RP die eigentlichen Lesevorgänge durchführt. Bei der Abarbeitung sehr langer logischer Warteschlangen hinkt damit der Lesezeiger RP dem Lesezeiger $T_{now}$ hinterher.

Bei sehr hoher Last auf den Verbindungen kann es schließlich dazu kommen, daß der Lesezeiger RP soweit hinter dem Lesezeiger $T_{now}$ hinterherhinkt, daß einen eindeutige Zuordnung von Zukunft und Vergangenheit nicht mehr gegeben ist. Dieser Fall wäre gegeben, wenn beispielsweise $T_{now}$ bereits das Speicherelement $n_{SB}$ = 2048 verlassen hat und bereits auf beispielsweise auf das Speicherelement 5 zeigt, während der Lesezeiger RP noch mit der Abarbeitung des Speicherelementes 10 beschäftigt ist. Um derartige Situationen zu vermeiden, wird erfindungsgemäß das Hinterherhinken des Lesezeigers RP hinter dem Lesezeiger $T_{now}$ begrenzt. Hierzu wird ein Wert $\tau = T_{now}$ - RP eingeführt, der durch die Differenz der beiden Lesezeiger $T_{now}$ und RP definiert ist. Die maximale Größe, die der Wert $\tau$ nicht überschreiten darf, ist softwaremäßig vorgebbar.

Wird also dieser maximale Wert aufgrund hoher Verkehrslast überschritten, wird das Inkrementieren des Lesezeigers $T_{now}$ angehalten. Der Lesezeiger RP rückt damit aber wieder näher an den Lesezeiger $T_{now}$ heran. Damit ist die Konsequenz verbunden, daß die ATM-Zellen in den logischen Warteschlangen $W_1...W_n$ entsprechend seltener ausgelesen werden können, was einer geringeren Übertragungsrate entspricht.

Im folgenden soll nun der zeitliche Ablauf des erfindungsgemäßen Verfahrens näher erläutert werden. Dabei gilt es zu beachten, daß alle Steuervorgänge von einer Steuervorrichtung, im folgenden Buffermanagement genannt, durchgeführt werden:

Zunächst trifft eine ATM-Zelle in einer der logischen Warteschlangen $W_1...W_n$ ein. Wie bereits eingangs geschildert, erfolgt das Speichern der ATM-Zellen im Zellenspeicher Zsp, während im Pufferspeicher lediglich die Zeiger $P_{n1}...P_{nm}$ abgelegt sind. Gemäß vorliegendem Ausführungsbeispiels soll nun eine ATM-Zelle in eine Speicherzelle des Zellenspeichers Zsp eingeschrieben werden, die durch im Pufferspeicher $P_1$ definierte Zeiger $P_{11}$ adressiert wird. Dabei gilt es nun zu beachten, ob die logische Warteschlange $W_1$ leer ist und damit definitionsgemäß momentan keine weitere ATM-Zellen aufweist. Beim Eintreffen dieser ATM-Zelle im Speichersystem Zsp sowie einem entsprechenden Eintrag im Pufferspeicher $P_1$ wird jetzt zunächst anhand der Tabelle TB im Feld ST überprüft, zu welchem Zeitpunkt die nächste ATM-Zelle dieser Verbindung ausgelesen werden soll. Ist dieser Zeitpunkt bereits verstrichen, wird die der logischen Warteschlange $W_1$ zugeordnete Identifikationsnummer in die logische Warteschlange des Speicher SP dort eingetragen, die gerade durch den Lesezeiger $T_{now}$ adressiert wird. Der Eintrag erfolgt stets am Ende der logischen Warteschlange, gegebenenfalls kann dies auch der einzige Eintrag sein.

Wird eine ATM-Zelle in eine der logischen Warteschlangen $W_1...W_n$ eingelesen, in der bereits ATM-Zellen abgelegt sind, so erfolgt kein unmittelbarer Eintrag bei Ankunft, wie im Fall einer leeren logischen Warteschlange. Ob nun eine der logischen Warteschlangen ATM-Zellen enthält oder nicht, wird vom Buffermanager ermittelt, indem er beim Auslesen einer ATM-Zelle aus einer der logischen Warteschlangen $W_1...W_n$ verifiziert, ob dies die letzte ATM-Zelle war. Wird somit ermittelt, daß die logische Warteschlange mit weiteren ATM-Zellen gefüllt ist, wird unmittelbar zunächst in der Tabelle TB in der Spalte ST überprüft, wann für diese Verbindung die nächste ATM-Zelle ausgelesen werden soll. Beispielhaft soll dies in 10 weiteren Zellzyklen von dem momentanen Stand des Lesezeigers $T_{now}$ aus erfolgen. Damit wird nun in der Spalte ST diese Zeit eingetragen. Weiterhin wird die logische Warteschlange $WH_1....WH_{nSB}$ im Speicher SP um die zugeordnete Identifikationsnummer erweitert, sowie das Speicherelement $n_{SB} = T_{now} + 10$ des Kalenders K mit den hierzu erforderlichen Zeigern $Z_A$, ZE aktualisiert.

Der Kalendermechanismus des Rate Shaping Verfahrens kommt ebenfalls in der Schedulerblockeinrichtung SBS zum Ablauf. Dabei werden anstelle der logischen Warteschlangen $W_1...W_n$ die Schedulerblockeinrichtungen SB0...SB127 adressiert und entsprechend ATM-Zellen aus den Zellenspeichern Zsp ausgelesen. In der Tabelle TB sind dann anstelle der Identifikationsnummern W solche für die Schedulereinrichtungen SB0...SB127 abgelegt. Ebenso werden hier Gewichtungsfaktoren $R_j$ anstelle der Gewichtungsfaktoren $r_i$ berechnet und in der Spalte ST abgelegt. Weiterhin wird der Wert $\tau$ hier derart gewählt, daß das Anhalten der Inkrementierung von $T_{now}$ nur mit sehr geringer Wahrscheinlichkeit erfolgt. Der gewählte Wert $\tau$ hängt von der maximal möglichen Last auf der Ausgangsleitung ab. Um eine maximale Last von 95 % sicherstellen zu können, sollte der Wert $\tau = 256*T_{step}$ gewählt werden. Für eine Last von 90 % ist $\tau = 128*T_{step}$ ausreichend.

Eine Besonderheit ist bei dem in der Schedulerblockeinrichtung SBS ablaufenden Kalendermechanismus noch gegeben. Gemäß Fig. 2 sind ATM-Zellen RT aufgezeigt, die an den Schedulereinrichtungen SB0...SB127 vorbei geleitet und direkt der Schedulerblockeinrichtung SBS zugeführt werden. Dabei handelt es sich um die vorstehend angesprochenen Real-Time ATM-Zellen.

Trifft eine Real-Time ATM-Zelle im Zellenspeicher ZSP ein, so wird die zugeordnete Identifikationsnummer RT-ID in der logischen Warteschlange des Speicher SP eingetragen, die gerade durch den Lesezeiger $T_{now}$ adressiert wird. Der Eintrag erfolgt stets am Ende der logischen Warteschlange, gegebenenfalls kann dies auch der einzige Eintrag sein. Damit werden diese hochprioren ATM-Zellen unmittelbar ausgelesen.

**Patentansprüche**

1. Verfahren zum optimierten Übertragen von ATM-Zellen über Verbindungsabschnitte, mit einem Sortierverfahren, das eine erste, die Systemzeit enthaltende Variable ($T_{now}$) sowie eine zweite, eine Wunschbedienzeit des zuletzt behandelten Stromes von ATM-Zellen enthaltende Variable (RP) enthält, wobei die erste Variable ($T_{now}$) mit der zweiten Variablen (RP) in einem zyklischen Zeitraster miteinander verglichen werden und erst dann eine weitere ATM - Zelle ausgesandt werden darf, sobald die Variable ($T_{now}$) die Wunschzeit erreicht oder überschritten hat,
   **dadurch gekennzeichnet,**
   daß ein zeitlicher Abstand zwischen der ersten Variablen ($T_{now}$) und der zweiten Variablen (RP) gebildet wird und bei Überschreiten dieses zeitlichen Abstandes um einen vorgegebenen Schwellenwert ($\tau$) die Inkrementierung der ersten Variablen ($T_{now}$) solange angehalten wird, bis der vorgebene Schwellenwert ($\tau$) wieder unterschritten ist.

2. Verfahren nach Anspruch 1,
   **dadurch gekennzeichnet,**
   daß in den Schedulereinrichtungen (SB0...SB127)

erste logische Warteschlangen ($W_1...W_n$) definiert werden, die nach Maßgabe der in einer Tabelle (TB) sowie einem Kalender (K) getätigten Einträge adressiert werden.

3. Verfahren nach Anspruch 1,
   **dadurch gekennzeichnet,**
   daß von einer zentralen Schedulerblockeinrichtung (SBS) die Schedulereinrichtungen (SB0...SB127) nach Maßgabe der in der Tabelle (TB) sowie dem Kalender (K) getätigten Einträge adressiert werden.

4. Verfahren nach Anspruch 1 bis 3,
   **dadurch gekennzeichnet,**
   daß zweite logische Warteschlangen ($WH_1..WH_{nSB}$) definiert werden, die in ihrer Gesamtheit eine verkettete Liste darstellen.

5. Verfahren nach Anspruch 1 bis 3,
   **dadurch gekennzeichnet,**
   daß über einen gesonderten, parallel zu den Schedulereinrichtungen (SB0...SB127) angeordneten Verbindungsabschnitt zusätzlich Real-Time ATM-Zellen (RT) der Schedulerblockeinrichtung (SBS) mit einer höheren Priorisierung zugeführt werden, als die über die Schedulereinrichtungen (SB0...SB127) übertragenen ATM-Zellen aufweisen.

FIG 1

# FIG 2

FIG 3

FIG 4

Europäisches Patentamt

**EUROPÄISCHER RECHERCHENBERICHT**

Nummer der Anmeldung

EP 97 11 3864

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | BOYER P E ET AL: "SPACING CELLS PROTECTS AND ENHANCES UTILIZATION OF ATM NETWORK LINKS" IEEE NETWORK: THE MAGAZINE OF COMPUTER COMMUNICATIONS, Bd. 6, Nr. 5, 1.September 1992, Seiten 38-49, XP000560519 | 1 | H04Q11/04 |
| Y | * Seite 43, rechte Spalte, Zeile 49 - Seite 44, rechte Spalte, Zeile 2 * <br> --- | 2,4,5 | |
| Y | EP 0 705 007 A (ROKE MANOR RESEARCH) 3.April 1996 * Spalte 2, Zeile 29 - Zeile 38 * * Spalte 3, Zeile 26 - Spalte 4, Zeile 6 * <br> --- | 2,4 | |
| Y | CHIPALKATTI R ET AL: "SCHEDULING POLICIES FOR REAL-TIME AND NON-REAL-TIME TRAFFIC IN A STATISTICAL MULTIPLEXER" TECHNOLOGY: EMERGING OR CONVERGING?, OTTAWA, APRIL 23 - 27, 1989, Bd. 3, 23.April 1989, INSTITUTE OF ELECTRICAL AND ELECTRONICS ENGINEERS, Seiten 774-783, XP000671034 * Seite 775, rechte Spalte, Zeile 5 - Zeile 35 * * Seite 777, rechte Spalte, Zeile 60 - Seite 778, linke Spalte, Zeile 3 * <br> ----- | 5 | RECHERCHIERTE SACHGEBIETE (Int.Cl.6) <br><br> H04Q |

Der vorliegende Recherchenbericht wurde für alle Patentansprüche erstellt

| Recherchenort | Abschlußdatum der Recherche | Prüfer |
|---|---|---|
| DEN HAAG | 17.Oktober 1997 | Veen, G |

EPO FORM 1503 03.82 (P04C03)